Europäisches Patentamt

European Patent Office

Office européen des brevets

(19)

(11) Veröffentlichungsnummer: **0 438 161 A2**

# EUROPÄISCHE PATENTANMELDUNG

(12)

(21) Anmeldenummer: 91100556.9

(22) Anmeldetag: 18.01.91

(51) Int. Cl.5: **G03B 21/56**

(30) Priorität: 19.01.90 DE 4001458

(43) Veröffentlichungstag der Anmeldung:
24.07.91 Patentblatt 91/30

(84) Benannte Vertragsstaaten:
AT BE CH DE DK ES FR GB GR IT LI LU NL SE

(71) Anmelder: DEUTSCHE INSTITUTE FUR TEXTIL-
UND FASERFORSCHUNG STUTTGART
Stiftung des öffentlichen Rechts
Körschtalstrasse 26
W-7306 Denkendorf(DE)

(72) Erfinder: Hoffbauer, Dirk
Grüne Strasse 8
W-4792 Bad Lippspringe(DE)
Erfinder: Sperber, Georg
Bleichstrasse 43a
W-4792 Bad Lippspringe(DE)
Erfinder: Weinsdörfer, Helmut, Dr.-Ing.
Äckerlestrasse 26
W-7401 Pliezhausen(DE)
Erfinder: Wolfrum, Jürgen, Dipl.-Ing. (FH)
Kirchäckerstrasse 54
W-7333 Ebersbach/Fils(DE)

(74) Vertreter: Gleiss, Alf-Olav, Dipl.-Ing. et al
Patentanwaltskanzlei Gleiss & Grosse
Silberburgstrasse 187
W-7000 Stuttgart 1(DE)

(54) Projektionswand.

(57) Sie weist ein Gewebe auf, das die Projektionsfläche bildet und zumindest auf dieser Projektionsfläche unbeschichtet ist. Auf dieser Projektionsfläche dominieren in einer der beiden Hauptrichtungen des Gewebes verlaufende helle Fäden eines ersten Fadensystems, wobei diese Hauptrichtung bei vertikaler, ebener Anordnung der Projektionsfläche vertikal verläuft.

EP 0 438 161 A2

## PROJEKTIONSWAND

Die Erfindung betrifft eine Projektionswand gemäß dem Oberbegriff des Anspruches 1.

Mit Projektionsfläche der Projektionswand ist diejenige Fläche von ihr verstanden, die dazu vorgesehen ist, daß auf sie Bilder projiziert werden. Die Projektionsfläche kann der vollständigen Vorderseite oder einem vorgesehenen Bereich der Vorderseite der Projektionswand entsprechen.

Projektionswände dienen der Wiedergabe von auf sie projizierten stehenden Bildern und von Filmen. Bekannte übliche Projektionswände dieser Art bestehen aus mit Beschichtungen versehenen Baumwollgeweben, die nämlich eine stabilisierende Rückenbeschichtung sowie eine reflektierende Spezialbeschichtung auf der Vorderseite haben (Zeitschrift textil praxis international 1982, Seite 758). Die Herstellung solcher Projektionswände ist jedoch teuer. Da ferner beide Beschichtungen aus Kunststoffen bestehen, entweichen beim Beschichten des Baumwollgewebes aus dem Kunststoff in größerem Umfange Schadstoffe, die die Umwelt belasten können. Die Beseitigung solcher Schadstoffe ist zwar möglich, doch erhöht dies die Herstellungskosten solcher Projektionswände noch weiter.

An Projektionswände werden ferner bestimmte Forderungen bezüglich ihrer mechanischen und optischen Eigenschaften gestellt. Mechanisch sollen sie die Eigenschaft haben, sich zusammenrollen zu lassen, um sie raumsparend transportieren und auch ggfs. aufbewahren zu können. In vertikalen ebenen Zustand - im weiteren Projektionsstellung genannt -, wie er für das Projizieren von Bildern gewünscht ist, soll die Projektionsfläche wellenfrei und faltenfrei sein, um keine Bildverzerrungen zu verursachen. Ferner ist es erwünscht, daß die Projektionsfläche bezüglich der Reflektion anisotrope Eigenschaften aufweist, nämlich, wenn sie zur Wiedergabe von auf sie projizierten Bildern eben und vertikal ausgerichtet ist, sich also in Projektionsstellung befindet, soll sie auf sie senkrecht auftreffendes weißes Licht in horizontalen Ebenen so reflektieren, daß die Leuchtdichte der Bildwand sich über relativ große horizontale Ausstrahlungswinkel nicht stark ändert und erst dann mit weiter zunehmenden Ausstrahlungswinkeln rasch abfällt. In vertikalen, auf der Projektionsfläche in deren Projektionsstellung senkrecht stehenden Ebenen soll dagegen die Leuchtdichte mit zunehmenden vertikalen Ausstrahlungswinkeln schon ab erheblich kleineren Ausstrahlungswinkeln sich rasch verringern. Letzteres u.a. deshalb, damit nicht unnötig die Decke des Zuschauerraums beleuchtet wird und ferner, um die Lichtverluste zu verringern und so das projizierte Bild für den Betrachter heller zu machen. Dies versuchte man durch entsprechende Struktur der Beschichtung der Vorderseite des Gewebes zu erreichen, was die Herstellungskosten noch weiter erhöht. Auch haben diese bekannten Projektionswände aus doppelseitig beschichteten Geweben den Nachteil, daß durch die Beschichtungen ihr Gewicht erheblich erhöht wird.

Ferner ist eine Beschichtung der Vorderseite der Projektionswand praktisch auf nicht sehr breite Gewebebahnen beschränkt, da diese Beschichtung nicht so gleichmäßig hergestellt werden kann, daß die Reflektionseigenschaften über die gesamte Projektionsfläche gleich sind. Vielmehr werden bei breiteren Projektionsflächen reflektierte Bilder wolkig. Man kann deshalb nur nicht sehr breite Gewebebahnen vorderseitig so beschichten, daß die Reflektionseigenschaften zufriedenstellend sind und man muß dann größere Projektionswände stets aus mehreren solchen zueinander parallelen beidseits beschichteten Gewebebahnen durch Schweißen zusammensetzen, was die Kosten umso mehr erhöht je größer die Anzahl der erforderlichen Bahnen ist. Auch wird das Erreichen der gewünschten Planheit der Projektionsfläche umso schwieriger, je größer die Anzahl der sie bildenden, nebeneinander angeordneten Bahnen ist.

Es ist deshalb eine Aufgabe der Erfindung, eine Projektionswand zu schaffen, die sich verhältnismäßig kostengünstig mit verhältnismäßig geringem Gewicht/Flächeneinheit herstellen läßt und die dennoch günstige Reflektionseigenschaften aufweist. Auch soll sie sich auch in großer Breite herstellen lassen, ohne daß die Reflektionseigenschaften ihrer Projektionsfläche hierdurch leiden.

Diese Aufgabe wird erfindungsgemäß durch eine Projektionswand gemäß Anspruch 1 gelöst.

Mit Projektionsstellung der Projektionswand ist, wie erwähnt, die Stellung bezeichnet, in der ihre Projektionsfläche zur Reflektion von auf sie projizierten Bildern eben und vertikal ausgerichtet ist.

Diese erfindungsgemäße Projektionswand eignet sich infolge ihrer guten Reflektion für Projektionswände aller Art, jedoch auch noch für andere Zwecke, insbesondere auch für Vorhänge , welche also außer ihrer Vorhangfunktion auch als Projektionswände verwendet werden können.

Indem die Projektionsfläche der erfindungsgemäßen Projektionswand eine unbeschichtete Oberfläche des Gewebes ist, ist ihre Herstellung infolge der nicht mehr vorhandenen Beschichtungen bzw. nur noch einer rückseitigen Beschichtung anstatt zweier Beschichtungen auch einfacher, kostengünstiger und umweltschonender als bei einer aus vorderseitig und rückseitig beschichtetem Gewebe bestehenden Projektionswand. Auch kann die erfindungsgemäße Projektionswand, da die ganze Projektionsfläche nicht beschichtet ist, in sehr großen Breiten bspw. in Breiten bis zu 4 m oder noch mehr nahtlos hergestellt werden und selbst große Projektionswände können so meist aus einem nahtlosen Gewebe bestehen, oder falls sie aus mehreren Gewebebahnen zusammengesetzt werden, wird die Anzahl der Nähte verringert, was die gewünschte Planheit der Projektionsfläche leichter und besser erreichen läßt.

Die anisotropen Reflektionseigenschaften der Projektionsfläche des Gewebes werden überwiegend oder ganz oder im wesentlichen durch die dominierenden hellen Fäden bewirkt. Diese dominierenden hellen Fäden sind entweder Schußfäden oder Kettfäden. Beide Möglichkeiten bestehen also.

Unter den beiden Hauptrichtungen des Gewebes sind die der Kettfadenrichtung und der Schußfadenrichtung entsprechenden Richtungen verstanden. Diese beiden Hauptrichtungen stehen also etwa senkrecht aufeinander.

Die in diesen beiden Hauptrichtungen verlaufenden Kettfäden und Schussfäden verlaufen bei ebener Ausbreitung des Gewebes nicht genau gerade, sondern schlängeln sich durch das sie jeweils kreuzende Fadensystem. Dennoch sei im weiteren zur Vereinfachung der Formulierung im weiteren gesagt, daß die Fäden in der einen oder anderen Hauptrichtung verlaufen. Wenn beispielsweise die Projektionswand sich in ihrer ebenen, vertikal gerichteten Projektionsstellung befindet, dann sei zur Formulierungsvereinfachung bspw. gesagt, dass die dominierenden hellen Fäden der Projektionsfläche in vertikaler Richtung und die Fäden des sie kreuzenden Fadensystemes in horizontaler Richtung verlaufen, obwohl sie in diesen Richtungen nicht genau gerade verlaufen, sondern sich durch die Fäden des von ihnen gekreuzten Fadensystemes schlängeln.

Unter Fäden sind Fäden aller Art verstanden, wie Garne, Zwirne, Monofilamente, Multifilamentgarne und allgemein längliche, aus textilen Fasern, seien es Naturfasern oder sonstige Fasern, oder aus mindestens einem Filament bestehende Fäden. Unter Faden ist also jede Art eines länglichen textilen Gebildes verstanden, das als Kettfaden bzw. als Schußfaden oder auch als Füllfaden bei der Herstellung des Gewebes eingesetzt werden kann.

Die erfindungsgemäße Projektionswand ist besonders leicht wickelbar, weil ihr Gewebe entweder überhaupt keine es versteifende Beschichtung aufweist oder falls doch, dann ihr Gewebe nur rückseitig mit einer Beschichtung versehen ist, die nur dünn zu sein braucht, da sie nur der Herabsetzung der Lichtdurchlässigkeit und eventuell noch dem stärkeren Zusammenhalt von Fäden des Gewebes dient. In manchen Fällen kann das Gewebe auch mit randseitigen schmalen Beschichtungen versehen sein, die jedoch vorzugsweise nur dem Verfestigen der Ränder des Gewebes zu dienen brauchen.

In den Unteransprüchen sind einige vorteilhafte Weiterbildungen und Ausgestaltungen beschrieben.

Vorzugsweise kann das Gewebe die Projektionswand bilden. Sie besteht dann nur aus dem unbeschichteten Gewebe, welches Füllfäden enthalten kann oder nicht. Ihre Vorderseite kann dabei ganz oder teilweise die Projektionsfläche bilden.

Das Gewebe kann aus einer Gewebebahn oder mehreren nebeneinander und/oder übereinander angeordneten Gewebebahnen mit oder ohne Füllfäden bestehen. Übereinander angeordnete Gewebebahnen bilden Teilgewebe, desgleichen setzt sich ein Mehrfachgewebe aus Teilgeweben mit oder ohne Füllfäden zusammen. Für das Gewebe bzw. die Teilgewebe kommen unterschiedliche Bindungen infrage, vorzugsweise Atlasbindungen oder Ableitungen von ihnen. Doch kommen auch andere Bindungen infrage, insbesondere Köperbindungen und in manchen Fällen auch Leinwandbindung und Ableitungen von ihnen.

Wenn das Gewebe der Projektionswand rückseitig eine Beschichtung aufweist, kann diese vorzugsweise aus dunklem, insbesondere schwarzem Kunststoff oder anderem geeigneten Beschichtungsmaterial oder Folie bestehen. Falls das Gewebe dunkle Fäden aufweist, kann dieses bereits ausreichende Lichtundurchlässigkeit bewirken, und dann kann eine rückseitige Beschichtung auch helle Farbe haben und nur der Erhöhung der Festigkeit des Gewebes dienen.

Das Gewebe läßt sich ferner auf Webmaschinen entsprechend großer Webbreiten in sehr großen Breiten weben, bspw. in Breiten von 2 bis 4 m oder auch mehr, oder falls erwünscht, natürlich auch mit geringeren Breiten.

Die dominierenden hellen Fäden sind in erster Linie maßgebend für die anisotropen Reflektionseigenschaften des Gewebes oder im wesentlichen oder allein für sie verantwortlich. Außer diesen dominierenden hellen Fäden kann das Gewebe noch weitere helle Fäden enthalten, bspw. in der anderen Hauptrichtung des Gewebes verlaufende helle Fäden, die mit den dominierenden hellen Fäden verwoben sind und/oder in das Gewebe eingelagerte Füllfäden und/oder Fäden eines Zwischengewebes, das zwischen einem die dominierenden hellen Fäden aufweisenden Obergewebe und einem die dominierenden dunklen Fäden aufweisenden Untergewebe angeordnet und mit dem Obergewebe und dem Untergewebe fest verbunden ist. Bspw. können auch die Fäden eines der Fadensysteme eines solchen Untergewebes zweckmäßig helle Fäden sein.

Die dunklen Fäden dienen der Herabsetzung der Lichtdurchlässigkeit des Gewebes. Es genügt oft, wenn die Lichtdurchlässigkeit des Gewebes durch die dunklen Fäden lediglich erheblich reduziert ist, bezogen auf ein gleich aufgebautes Vergleichsgewebe, das lediglich aus hellen Fäden zusammengesetzt ist. Gegebenenfalls können die dunklen Fäden auch so dicht liegen, daß sie das Gewebe ganz oder nahezu lichtundurchlässig machen. Falls das Gewebe mit einer rückseitigen Beschichtung versehen ist, kann diese zweckmäßig dunkel, vorzugsweise schwarz sein und allein oder in Verbindung mit dunklen Fäden des Gewebes die gewünschte Lichtundurchlässigkeit der Projektionswand erreichen lassen.

Helle Fäden sind insbesondere weiße Fäden, doch können sie auch schwach getönte helle Fäden sein, bspw. silberfarbig oder gelblich getönte Fäden.

Besonders einfache Ausführungsformen des Gewebes sehen vor, daß es ein Einfachgewebe aus je einem Schuß- und Kettfadensystem oder aus drei Fadensystemen ist.

Wenn höhere Anforderungen an das Gewebe bezüglich seiner Reflektionseigenschaften ggfs. auch an geringe Lichtdurchlässigkeit gestellt werden, kann zweckmäßig vorgesehen sein, daß es aus mehreren übereinander angeordneten Teilgeweben besteht, vorzugsweise ein Mehrfachgewebe ist. Es kann vorzugsweise zwei oder drei oder in manchen Fällen auch noch mehr übereinander liegende Teilgewebe aufweisen, nämlich ein Obergewebe und ein Untergewebe und ggfs. ein oder mehrere Zwischengewebe.

Die Verbindung der Teilgewebe miteinander kann auf irgendeine geeignete Weise vorgenommen sein, bspw. durch stellenweises oder durchgehendes Verkleben oder Verschweißen, wenn miteinander verschweißbare Fäden im Obergewebe und Untergewebe vorhanden sind, oder durch Vernähen. Besonders zweckmäßig ist es jedoch, vorzusehen, daß die Teilgewebe durch Fäden von ihnen miteinander zu einem Mehrfachgewebe verbunden sind, was man auch als Anbinden bzw. Abbinden bezeichnet. Zwischen dem Obergewebe und dem Untergewebe eines solchen Mehrfachgewebes können oft besonders zweckmäßig Füllfäden angeordnet sein, die sowohl die Reflektionseigenschaften wie auch die Lichtundurchlässigkeit weiterhin verbessern können, wie auch die Planheit des Gewebes, wenn es sich in Projektionsstellung befindet, d.h., wenn es vertikal angeordnet ist, und so auch in schwierigeren Fällen Faltenbildung und Wellenbildung des Gewebes in Projektionsstellung besonders gut entgegenwirkt.

Die Füllfäden können auf irgendeine geeignete Weise zwischen dem Obergewebe und dem Untergewebe gehalten sein, bspw. durch Kleben, Verschweißen, Vernähen usw. Bevorzugt kann vorgesehen sein, daß die Füllfäden durch das Obergewebe und das Untergewebe verbindende Fäden des Obergewebes und/oder des Untergewebes mit gehalten werden, d. h. in dem Gewebe fixiert sind.

Die Füllfäden können in einer oder mehreren Schichten angeordnet sein, vorzugsweise können die Füllfäden in einer der beiden Hauptrichtungen ein- oder mehrschichtig verlegt sein oder es kann auch vorgesehen sein, daß die Füllfäden in mehreren Richtungen im Gewebe verlegt sind, vorzugsweise in beiden Hauptrichtungen Füllfäden verlegt sind. Besonders zweckmäßig können die in einer Richtung verlaufenden Füllfäden eine Fadenschicht und die hierzu senkrecht verlaufenden Füllfäden eine andere Fadenschicht bilden.

Die dominierenden hellen Fäden können vorzugsweise die Projektionsfläche weitgehend oder im wesentlichen oder praktisch allein bilden. Die dominierenden hellen Fäden sind entweder Schußfäden oder Kettfäden. Sie können dennoch allein oder praktisch allein die Vorderseite bzw. die Projektionsfläche des Gewebes bilden, indem die mit ihnen verwobenen Fäden des oder der anderen Fadensysteme von ihnen nahezu oder praktisch vollständig überdeckt werden. Hierzu können bspw. die Fäden dieses oder dieser anderen Fadensysteme wesentlich dünner als die dominierenden hellen Fäden sein. Doch gelingt es auch dann, wenn alle Fäden des Gewebes oder des Obergewebes im wesentlichen gleich dick sind, oder an dominierenden hellen Fäden dünner als die mit ihnen verbundenen Fäden sind, daß die dominierenden hellen Fäden praktisch allein die sichtbare Vorderseite des Gewebes bilden, durch entsprechend hohe Fadendichte und lange Flottierungen dieser Fäden.

Auch an der Rückseite des Gewebes können in einer seiner beiden Hauptrichtungen Fäden, vorzugsweise dunkle Fäden dominieren.

Durch die dominierenden hellen Fäden werden auch die anisotropen Reflektionseigenschaften des Gewebes maßgebend oder weitgehend oder im wesentlichen oder allein bestimmt.

Vorzugsweise kann vorgesehen sein, daß die dominierenden hellen Fäden der Projektionsfläche und/oder die dominierenden dunklen Fäden der Rückseite des Gewebes so verlegt sind, daß ihre an der Vorderseite des Gewebes bzw. an der Rückseite des Gewebes freiliegenden Längsbereiche (Fadenstrecken) länger, vorzugsweise wesentlich länger als ihre unter den mit ihnen zum Gewebe oder zu einem Obergewebe bzw. Untergewebeverwobenen, zu ihnen senkrecht verlaufenden Fäden - nachfolgend Querfäden genannt - befindlichen und so durch diese Querfäden überdeckten Längsbereiche sind, vorzugsweise die dominierenden hellen Fäden und/oder die dominierenden dunklen Fäden flottierende Fäden sind.

Vorzugsweise kann vorgesehen sein, daß die Projektionsfläche des Gewebes bei ebener Anordnung in senkrechter Parallelprojektion zumindest zu 70 %, vorzugsweise zumindest zu 80 % oder zumindest zu 90 % oder im wesentlichen oder in manchen Fällen sogar allein durch die dominierenden hellen Fäden gebildet ist. Dies kann man bspw. dadurch messen, indem man die Projektionsfläche des Gewebes oder einen Teil dieser Projektionsfläche in senkrechter Draufsicht maßstabgerecht fotografiert und die Summe der von den dominierenden hellen Fäden eingenommenen Flächenbereiche des ebenen Bildes dieser Vorderseite oder seines betreffenden Teiles zu dessen Gesamtfläche ins Verhältnis setzt und dieses Verhältnis durch Multiplikation mit 100 in Prozenten ausdrückt.

Ganz besonders vorteilhaft kann vorgesehen sein, daß die freiliegenden Längsbereiche der dominierenden hellen Fäden der Vorderseite und/oder der dominierenden dunklen Fäden der Rückseite des Gewebes über jeweils mindestens zwei Querfäden des zugeordneten Querfadensystems, vorzugsweise über jeweils mindestens vier Querfäden bindungsfrei liegen und daß alle oder fast alle restlichen Längsbereiche dieser dominierenden hellen Fäden und/oder dieser dominierenden dunklen Fäden jeweils weniger Querfäden des zugeordneten Querfadensystems als die zwischen ihnen befindlichen freiliegenden Längsbereiche queren, vorzugsweise jeweils nur einen Querfaden.

Ebenfalls kann zweckmäßig vorgesehen sein, daß die Fläche der Rückseite des Gewebes bei ebener Anordnung in senkrechter Parallelprojektion zumindest zu 60 %, vorzugsweise zumindest zu 80%, insbesondere zumindest zu 90% oder im wesentlichen durch in einer Hauptrichtung des Gewebes verlaufende dunkle Fäden - nachfolgend dominierende dunkle Fäden genannt - gebildet ist. Wenn die Rückseite des Gewebes durch ein Untergewebe gebildet ist, kann man jedoch auch vorsehen, daß es vollständig aus dunklen Fäden, bspw. in Leinwandbindung gewoben ist.

Wenn das Gewebe außer den vorderseitig dominierenden hellen Fäden rückseitig dominierende dunkle Fäden hat, so können diese besonders zweckmäßig in derselben Hauptrichtung des Gewebes verlaufen, jedoch ist es auch möglich, daß die dominierenden hellen Fäden in der einen Hauptrichtung und die dominierenden dunklen Fäden in der anderen Hauptrichtung des Gewebes verlaufen. Letzteres ist bspw. der Fall, wenn das Gewebe ein aus je einem Schußfadensystem und Kettfadensystem bestehendes Einfachgewebe ist.

Um ganz besonders gute Reflektionseigenschaften der Vorderseite des Gewebes zu erzielen, kann zweckmäßig vorgesehen sein, daß zumindest die hellen dominierenden Fäden des Gewebes, vorzugsweise alle hellen Fäden des Gewebes aus künstlich hergestellten Fasern und/oder künstlich hergestellten Filamenten bestehen oder solche Fasern oder Filamente enthalten. Auch die ganz oder im wesentlichen lichtundurchlässigen dunklen Fäden des Gewebes, wenn vorhanden, können bevorzugt aus künstlich hergestellten Fasern und/oder künstlich hergestellten Filamenten bestehen oder solche Fasern oder Filamente enthalten.

Es ist jedoch auch möglich, mindestens eine Teilanzahl der Fäden des Gewebes vorzusehen, die ganz oder teilweise aus Naturfasern, vorzugsweise aus Baumwollfasern bestehen.

Besonders gute Reflektionseigenschaften hat Polyester, bedingt durch einen hohen Brechungsindex von ca. 1,65. Es kann deshalb zweckmäßig vorgesehen sein, daß zumindest ein Teil der künstlich hergestellten Fasern oder Filamente von Fäden des Gewebes aus Polyester besteht, vorzugsweise zumindest die hellen Fäden des Gewebes. Anstatt Fasern oder Filamente aus Polyester, können in vielen Fällen auch zweckmäßig zumindest ein Teil der Fasern oder Filamente aus anderen polymeren Kunststoffen oder aus anderen künstlich hergestellten Substanzen, bspw. aus Zellwolle, bestehen.

Um die Reflektionseigenschaften der Projektionsfläche weiter zu beeinflussen und besonders günstig zu gestalten, kann ferner vorgesehen sein, daß zumindest die Filamente der hellen Fäden des Gewebes durch Multifilamentgarne gebildet sind, deren Filamente unrunde Querschnitte aufweisen, vorzugsweise multilobale Querschnitte, insbesondere trilobale, septolobale oder octolobale Querschnitte.

Ferner ist es oft besonders günstig, wenn zumindest die dominierenden hellen Fäden, vorzugsweise zumindest alle hellen Fäden Mattierungsmittel, vorzugsweise Titandioxid zur Erhöhung der Lichtstreuung enthalten. Jedoch werden oft auch besonders gute Ergebnisse mit Multifilamentgarnen aus glänzenden Filamenten erzielt.

Besonders zweckmäßig ist es, vorzusehen, daß das Gewebe so ausgebildet ist, daß in seiner Projektionsstellung die durch senkrecht auf seine Projektionsfläche auftreffendes weißes Licht konstanter Beleuchtungsstärke bewirkbare Leuchtdichte bis zu horizontalen Ausstrahlungswinkeln (a, -a) von mindestens 30°, vorzugsweise bis zu horizontalen Ausstrahlungswinkeln (a, -a) von ca. 35 bis 45°, insbesondere von ungefähr 40°, sich bezogen auf die Leuchtdichte bei einem Ausstrahlungswinkel von 0° um höchstens 20 %, vorzugsweise um höchstens 10 %, ändert, besonders zweckmäßig im wesentlichen konstant ist.

Ferner ist es zweckmäßig, daß das Gewebe so ausgebildet ist, daß in seiner Projektionsstellung die durch senkrecht auf seine Projektionsfläche auffallendes weißes Licht konstanter Beleuchtungsstärke bewirkte Leuchtdichte in bei b = 0° beginnenden relativ kleinen vertikalen Ausstrahlungswinkelbereichen von höchstens 25°, vorzugsweise von etwa 5 bis 15°, sich nur wenig, vorzugsweise um maximal 25 %, oder gar nicht ändert und anschließend an diese Ausstrahlungswinkelbereiche mit größer werdenden vertikalen Ausstrahlungswinkeln rasch abnimmt.

Wenn alle oder ein Teil der Fäden des Gewebes aus Multifilamentgarnen bestehen, kann in vielen Fällen zweckmäßig vorgesehen sein, daß zumindest eine Teilanzahl der dominierenden hellen Fäden, vorzugsweise alle hellen Fäden, vorzugsweise alle hellen dominierenden Fäden texturierte (gekräuselte) Multifilamentgarne sind.

Jedoch kann in vielen Fällen auch besonders zweckmäßig vorgesehen sein, daß, wenn zumindest eine Teilanzahl der Fäden des Gewebes Multifilamentgarne sind, dann zumindest eine Teilanzahl der dominierenden hellen Fäden, vorzugsweise alle dominierenden hellen Fäden ungekräuselte, d.h. glatte Multifilamentgarne aus glänzenden und/oder mattierten Filamenten sind.

Die erfindungsgemäße Projektionswand kann oft nicht nur als reine Projektionswand dienen, sondern oft auch noch mindestens eine zusätzliche Anwendung haben. Vorzugsweise kann sie in vielen Fällen auch als Vorhang, bspw. als Fenstervorhang verwendet werden, der, wenn man auf ihm Bilder projizieren will, so angeordnet wird, daß seine als Projektionsfläche dienende Fläche vertikal und eben angeordnet ist.

In der Zeichnung sind Ausführungsbeispiele der Erfindung dargestellt. Es zeigen:

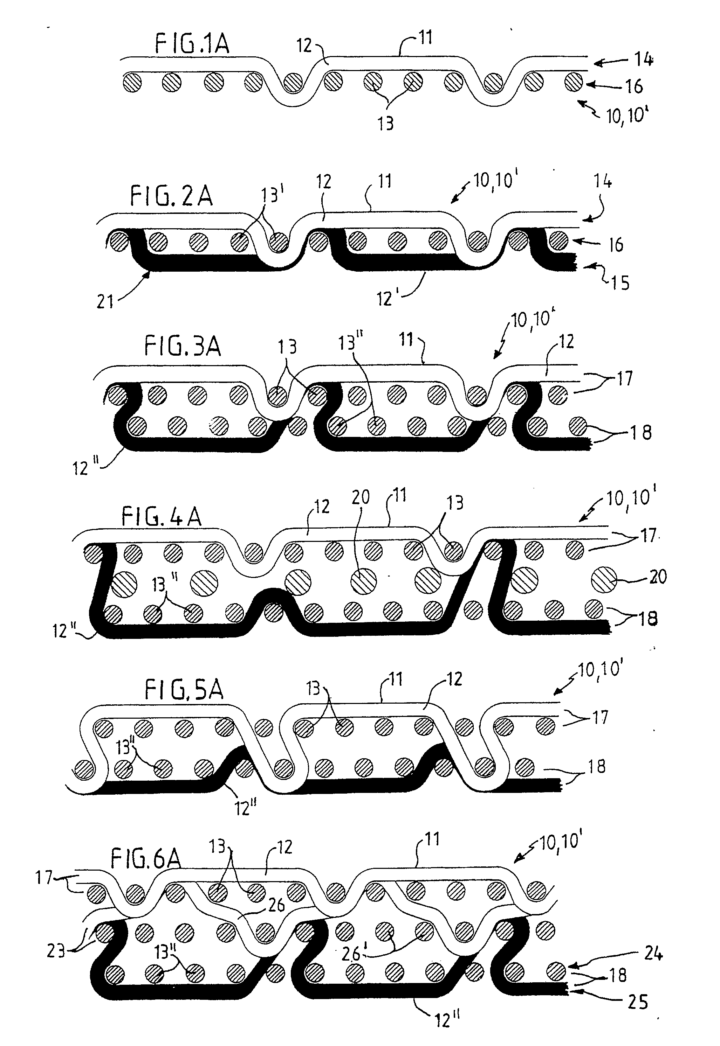

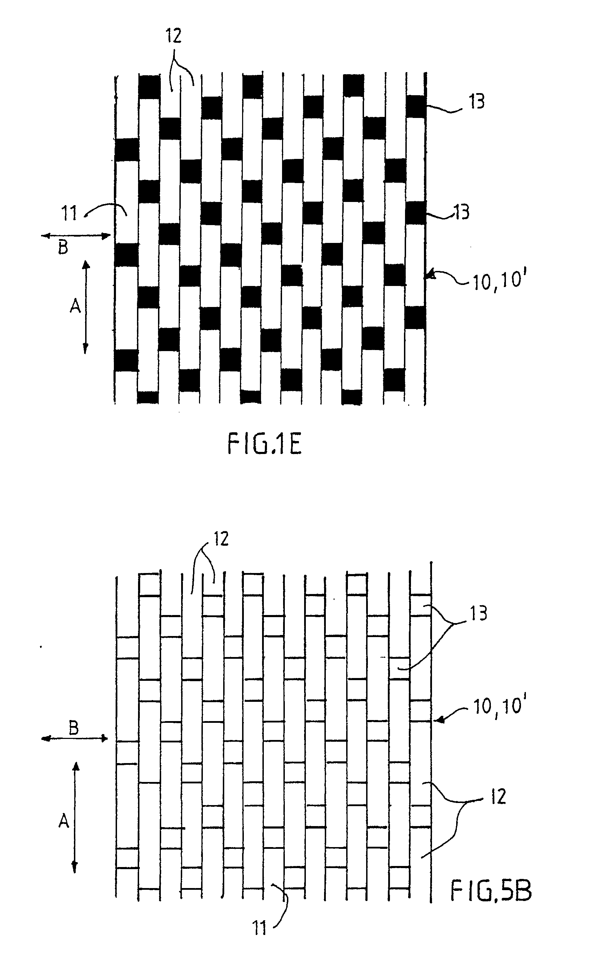

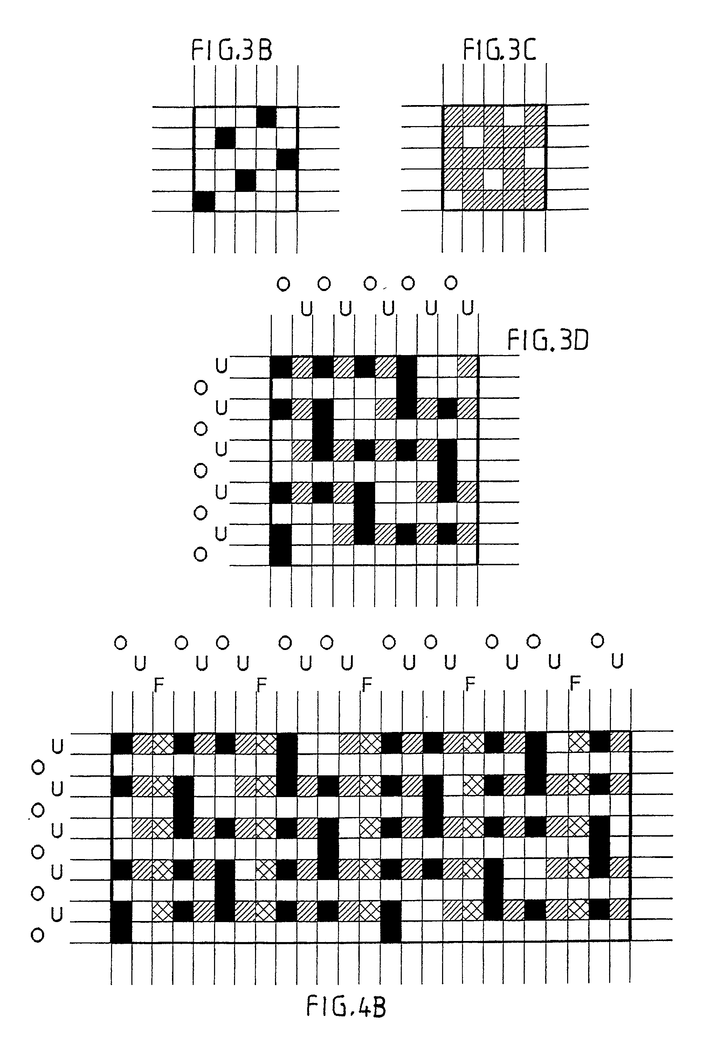

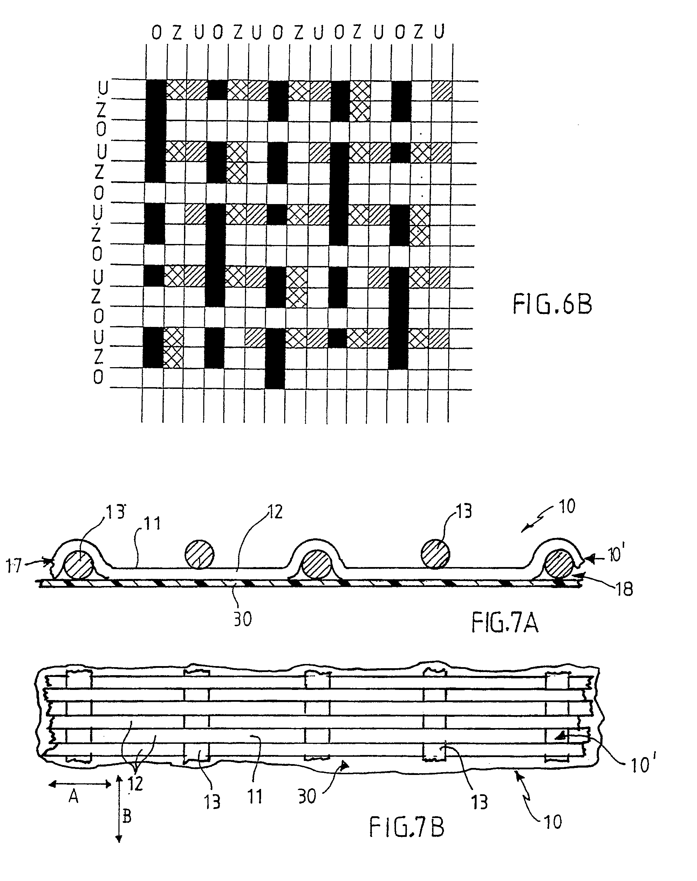

Fig. 1A, 2A, 3A, 4A
je einen Teilschnitt durch unbeschichtete, Projektionswände bildende Gewebe gemäß Ausführungsbeispielen der Erfindung,
Fig. 1B bis 1D
Ausführungsbeispiele von Bindungspatronen von Geweben nach Fig. 1A,
Fig. 1E
eine ausschnittsweise Draufsicht auf eine Projektionsfläche eines Gewebes nach Fig.1A mit einer Atlasbindung 1/4,
Fig. 2B und 2C
Ausführungsbeispiele von zwei Bindungspatronen von Geweben nach Fig. 2A,
Fig. 3B bis 3D
je ein Ausführungsbeispiel von Bindungspatronen eines Obergewebes (Fig. 3B) und eines Untergewebes (Fig. 3C) und des aus einem solchen Obergewebe und Untergewebe bestehenden Gesamtgewebes (Fig. 3D) eines Gewebes nach Fig. 3A,
Fig. 4B

die aus der Bindungspatrone nach Fig. 3D unter Hinzufügung von Füllfäden entstandene Bindungspatrone eines Gewebes nach Fig. 4A,
Fig. 5A und 6A
je einen Teilschnitt durch unbeschichtete, Projektionswände bildende Gewebe gemäß weiteren Ausführungsbeispielen der Erfindung,
Fig. 5B
eine ausschnittsweise Draufsicht auf ein Gewebe nach Fig. 5A mit einer Atlasbindung 1/4 seines Obergewebes,
Fig. 6B
ein Beispiel einer Bindungspatrone eines Dreifachgewebes nach Fig. 6A,
Fig. 6C
die Bindungspatrone einer Ripsbindung,
Fig. 7A
einen Teilschnitt durch eine Projektionswand, die aus einem rückseitig mit einer Folie beschichteten Gewebe besteht, gemäß einem Ausführungsbeispiel der Erfindung,
Fig. 7B
eine ausschnittsweise Draufsicht auf die Projektionsfläche der Projektionswand nach Fig. 7A,
Fig. 8
eine schaubildliche Ansicht eines Projektionswandgerätes, wobei zur Erläuterung von mit der Leuchtdichte von an der Projektionsfläche der Projektionswand reflektierten Lichtes zusammenhängende physikalische Größen eingetragen sind,
Fig. 9
ein Diagramm eines der Änderung der Leuchtdichte einer mit weißem Licht senkrecht beleuchteten Projektionsfläche einer Projektionswand gemäß einem Ausführungsbeispiel der Erfindung in Abhängigkeit der horizontalen und vertikalen Ausstrahlungswinkel a, -a, b, -b über für den Beschauer infragekommende Ausstrahlungswinkelbereiche.

Unter einem Gewebe ist ein aus einer Gewebebahn bestehendes oder ein aus mehreren Gewebebahnen zusammengesetztes Gewebe verstanden. In das Gewebe können noch Füllfäden eingefügt sein oder nicht. Wenn es aus mehreren Gewebebahnen zusammengesetzt ist, können diese übereinander und/oder mit oder ohne Überlappung nebeneinander angeordnet und geeignet miteinander verbunden sein , bspw . miteinander vernäht, verschweißt, verklebt usw. sein.

Bevor auf die in den Ausführungsbeispielen dargestellten, für Projektionen von Bildern und Filmen geeignete Gewebekonstruktion näher eingegangen wird, sei zunächst folgendes ausgeführt:

Unter Projektionsfläche 11 einer Projektionswand 10 ist ihre gesamte Vorderseite oder, wenn sie als Projektionsfläche ungeeignete, bspw. mehr oder weniger breite randseitige Bereiche hat, bspw.

verstärkte Webkanten, ihr als Projektionsfläche vorgesehener Bereich verstanden. Bei den Ausführungsbeispielen ist jeweils ohne weiteres möglich, daß die gesamten Vorderseiten 11 der betreffenden Projektionswände als Projektionsflächen dienen können, denen also ebenfalls Bezugszeichen 11 zukommen. Es ist jedoch auch möglich, die Projektionswand so auszubilden, daß nicht die gesamte Vorderseite 11 ihres Gewebes als Projektionsflächegeeignet ist.

Ferner sei noch erläutert, daß, wenn von ebener Projektionswand oder ebener Vorderseite oder ebener Projektionsfläche der Projektionswand gesprochen ist, dann die Ebene gemeint ist, in der die Projektionswand bzw. ihre Vorderseite oder Projektionsfläche ausgebreitet ist. Die Oberfläche der Vorderseite oder Projektionsfläche der Projektionswand ist wegen der sie bildenden Fäden nicht eben, sondern strukturiert, um ihre anisotropen Reflektionseigenschaften zu bewirken.

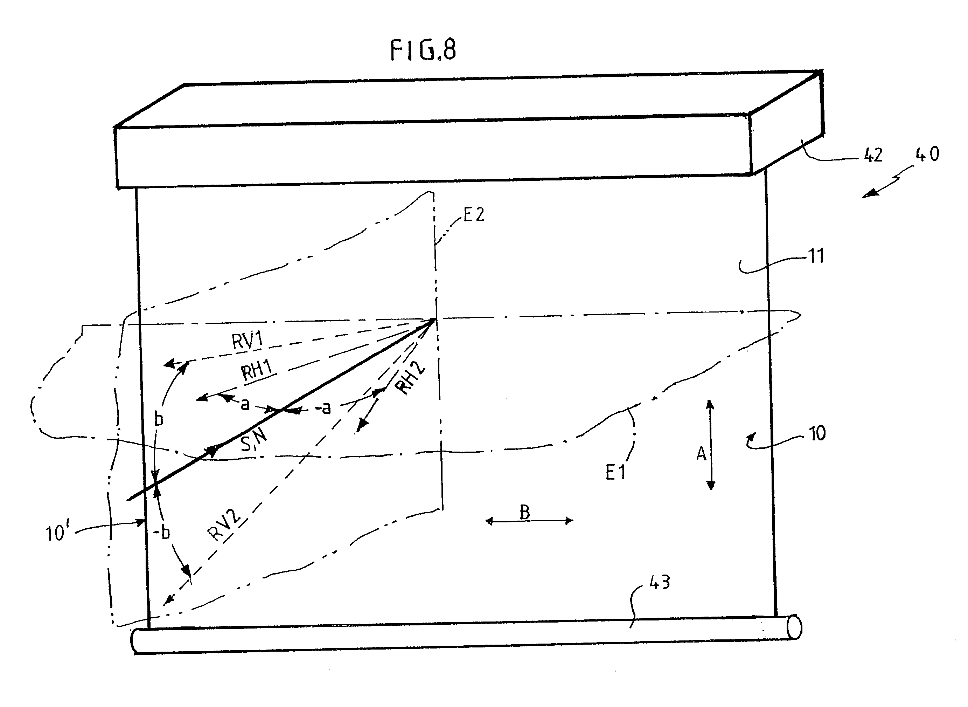

Wenn als Projektionswand 10 ein Gewebe 10' bzw. ein rückseitig beschichtetes Gewebe 10' (wie es an einem Beispiel Fig. 7A und 7B zeigen), dient, dann dominieren an seiner Projektionsfläche 11 die hellen Fäden 12 (z.B. Fig. 1A) eines in vertikaler Richtung (Doppelpfeile A der Fig. 1E, 5B, 7B, 8) der Projektionswand 10 verlaufenden ersten Fadensystemes, das ein Schußfadensystem oder Kettfadensystem und in einigen der Figuren mit 14 bezeichnet ist. Unter dominieren ist dabei verstanden, daß diese hellen Fäden 12, die in vertikaler Richtung der Projektionswand 10, wenn sie sich in der Projektionsstellung befindet, verlaufen, über sonstige an der Vorderseite oder Projektionsfläche 11 noch sichtbaren Fäden eines oder mehrerer anderer Fadensysteme bzw. von Füllfäden des Gewebes 10' dominieren und so die Reflektion des beim Projizieren von stehende Bilder und Filme auf sie auftreffenden Lichtes in der Weise anisotrop gestalten, daß die Leuchtdichte LD zumindest bis zu horizontalen Ausstrahlungswinkeln von ca. 30°, vorzugsweise von ca. 35 - 45°, insbesondere von ca. 40°, sich erheblich weniger ändert als bis zu gleich großen vertikalen Ausstrahlungswinkeln. Dies ist für das durch Personen erfolgende Betrachten der auf die Projektionsfläche 11 in deren Projektionsstellung projizierten stehenden oder bewegten Bilder äußerst vorteilhaft und ergibt so für die Betrachter vorteilhafte Projektionseigenschaften der Projektionswand. U.a. findet eine günstige Ausnutzung des auf die Projektionsfläche 11 auftreffenden Projektionslichtes statt und die Betrachter erhalten gleiche Eindrücke von den Bildern, wenn sie nicht nur direkt vor der Projektionswand 10 sitzen, sondern auch noch mehr oder weniger weit seitlich von ihr, wobei die schräg-seitlichen Betrachtungswinkel bezogen auf Flächennormalen N (Fig. 8) der ebenen Projektionsfläche 11 in horizontalen Ebenen im allgemeinen nicht größer als 30 bis 45° sind, da bei noch größeren Betrachtungswinkeln die projizierten Einzelbilder oder Filmbilder in stark störenden Verzerrungen erscheinen können.

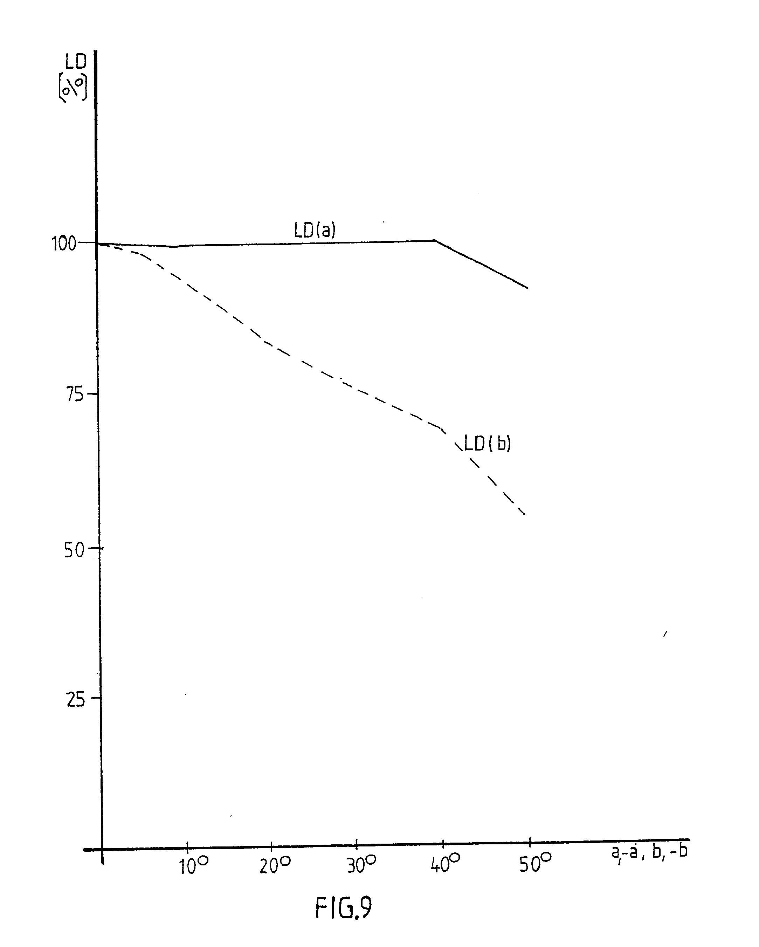

In dem Diagramm nach Fig. 9 ist dies am Beispiel einer Projektionswand 10 noch näher erläutert, die aus einem Dreifachgewebe bestand, deren Obergewebe, Untergewebe und Zwischengewebe jeweils in Atlasbindungen 1/4 aus weissen glatten Multifilamentgarnen gleicher metrischer Nummern mit hohen Fadendichten gewoben waren. Die Ordinate ist die prozentuale Leuchtdichte LD, wobei die Leuchtdichte in Richtung der Flächennormalen N zu 100% angesetzt ist. Man ersieht, daß die Leuchtdichte in horizontalen Ausstrahlungswinkeln a bzw. -a in den beiden Winkelbereichen von 0 bis ca. 40° praktisch konstant ist und erst ab horizontalen Ausstrahlungswinkeln a bzw. -a von über 40° mit weiter zunehmenden Ausstrahlungswinkeln a bzw. -a deutlich abfällt, und zwar rasch abfällt, was erwünscht ist, um das Projektionslicht nicht in von Betrachtern nicht besetzten Bereichen des betreffenden Raumes unnötig stark zu vergeuden. Dagegen nimmt die Leuchtdichte LD mit zunehmenden vertikalen Ausstrahlungswinkeln b und -b schon ab Ausstrahlungswinkeln b bzw. -b von ca. 5° mit weiter zunehmenden Ausstrahlungswinkeln rasch ab, ändert sich also in den Ausstrahlungswinkelbereichen b und -b von 0 bis 40° wesentlich stärker als in den Ausstrahlungswinkelbereichen a und -a von 0 bis 40°.

Erfindungsgemäße Projektionswände können vorzugsweise aus Ein- oder Mehrfachgeweben mit oder ohne Füllfäden bestehen, also aus den reinen unbeschichteten Geweben mit oder ohne Füllfäden, was viele Vorteile hat, wie geringe Kosten und Flächengewicht, leichtes Wickeln, umweltschonende Herstellung, usw. In manchen Fällen kann die Projektionswand auch aus rückseitig dunkel beschichtetem Gewebe mit oder ohne Füllfäden bestehen. Wenn eine rückseitige dunkle Beschichtung vorliegt, können zweckmäßig alle Fäden des Gewebes helle Fäden sein oder es können zur Erhöhung der Lichtundurchlässigkeit auch die Fäden mindestens eines Fadensystemes dennoch dunkle Fäden sein. Wenn die Projektionswand ein unbeschichtetes Gewebe ist, dann besteht mindestens ein Fadensystem aus dunklen Fäden.

Die Projektionsflächen 11 erfindungsgemäßer Projektionswände10 können durch die Ausbildung des sie bildenden Gewebes 10' im allgemeinen zweckmäßig so ausgebildet sein, daß LD (a) = LD (-a) ist, wo LD die Leuchtdichte bedeutet, desgleichen daß LD (b) = LD (-b) ist. Wenn es in Sonderfällen erwünscht sein sollte, daß diese Leuchtdichtesymmetrien nicht vorliegen sollen, so kann man diesem durch geeignete Gewebekonstruktionen auch Rechnung tragen.

Da bei erfindungsgemäßen Projektionswänden deren Projektionsflächen durch unbeschichtete Gewebeoberflächen gebildet sind, sind die Reflektionseigenschaften auch bei beliebigen Bemaßungen der Projektionswand über die gesamte Projektionsfläche gleich gut. Auch lassen sie sich eben und faltenfrei und wellenfrei in vertikalen Lagen anordnen, wie Aufhängen, Einspannen oder sonstwie anordnen.

Die dunklen Fäden und/oder die rückseitige Beschichtung der Projektionswand 10 hat bzw. haben insbesondere die Aufgabe, die Lichtdurchlässigkeit der Projektionswand herabzusetzen, wobei im allgemeinen völlige Lichtundurchlässigkeit jedoch nicht erforderlich ist, sondern es genügt, die Lichtdurchlässigkeit in dem für den jeweils gedachten Einsatzzweck der betreffenden Projektionswand erwünschten oder ausreichendem Maße herabzusetzen.

Die nachfolgend näher beschriebenen Ausführungsbeispiele von Projektionswänden 10 haben die vorgenannten Eigenschaften, unter anderem gilt für sie durchgehend LD (a) = LD (-a) und LD (b) = LD (-b).

Die Projektionswände 10 nach den Ausführungsbeispielen können nur als Projektionswände dienen oder auch zusätzlich noch anderen Zwecken dienen, vorzugsweise als Vorhänge, insbesondere als Fenstervorhänge. Im letzteren Falle kann man den betreffenden Vorhang also auch als Projektionswand verwenden, indem man ihn so zieht oder anordnet, daß seine als Projektionsfläche gewünschte Fläche im wesentlichen oder vollständig eben und faltenfrei und wellenfrei ist.

Diese Projektionswände 10 bestehen in den Ausführungsbeispielen nach den Fig. 1A, 2A, 3A, 4A, 5A und 6A nur aus den Geweben 10' , so daß hier die Bezugszeichen 10 und 10' denselben Gegenstand bezeichnen. Dagegen steht die Projektionswand 10 in Fig. 7A aus einem mit einer rückseitigen Beschichtung 30 versehenen Gewebe 10'.

Es sei ferner noch ausgeführt, daß die an der Projektionsfläche 11 des Gewebes 10', wenn es vertikal und eben ausgerichtet ist, (d.h. sich in Projektionsstellung befindet) dominierenden hellen Fäden 12, die in vertikaler Richtung dieses Gewebes 10' verlaufen, weitgehend oder im wesentlichen oder in Sonderfällen allein maßgebend dafür sind, daß die Projektionsfläche 11 die erforderlichen anisotropen Reflektionseigenschaften hat, da diese dominierenden Fäden 12 an der Projektionsfläche 11 "dominierende vertikale helle Rippen" ergeben, die auf sie auftreffendes Licht in erster Linie in horizontelen Ausstrahlungswinkeln und weniger oder kaum in vertikalen Ausstrahlungswinkeln reflektieren. Da die diese "vertikalen hellen Rippen" ergebenden hellen Fäden 12 an der Projektionsfläche 11 dominieren, beeinflussen sie also die Reflektionseigenschaften der Projektionsfläche des Gewebes bedeutender als die die Projektionsfläche mitbildenden sonstigen Fäden, vorzugsweise weitgehend oder im wesentlichen oder allein.

Wenn es erwünscht ist, daß die dominierenden hellen Fäden die Reflektionseigenschaften der Projektionsfläche allein oder im wesentlichen bestimmen, so kann man hierzu vorsehen, daß sie die sichtbare Fläche der Vorderseite des Gewebes allein oder im wesentlichen bilden, was bspw. dadurch erreichbar ist, daß diese hellen Fäden 12 mit hoher Fadendichte verlegt sind und die quer zu ihnen an der Vorderseite des Gewebes noch vorliegenden Fadenabschnitte anderer Fäden ihnen gegenüber optisch stark zurücktreten oder sogar optisch unbedeutend sind, beispielsweise kaum sichtbar oder dunkel sind oder nur einen insgesamt sehr kleinen Teil der freien Vorderseite des Gewebes einnehmen, was bspw. durch geringe Fadendichte des durch sie gebildeten Fadensystemes unterstützt oder erreicht werden kann. Hierzu kann es oft auch zweckmäßig sein, diese quer verlaufenden Fäden an der Vorderseite des Gewebes dünner oder glatter als die in vertikaler Richtung verlaufenden hellen Fäden vorzusehen.

Man kann auch vorsehen , die quer verlaufenden Fäden an der Projektionsfläche stärker hervortreten zu lassen, wenn es erwünscht ist, daß in der Projektionsstellung der Projektionsfläche die Leuchtdichte in vertikalen Ausstrahlungswinkeln b, -b nicht ganz so stark gegenüber der Leuchtdichte in horizontalen Ausstrahlungswinkeln a, -a zurücktritt, sondern bspw. bis zu vertikalen Ausstrahlungswinkeln von bspw. 10 bis 25° nur wenig oder noch nicht stark abfällt, was bspw. in Filmtheatern mit steil ansteigenden Sitzreihen oder mit Rängen zweckmässig sein kann.

Bevorzugt können die an der Projektionsfläche dominierenden hellen Fäden 12 flottierende Fäden sein. Die Flottierungen können zweckmäßig groß, vorzugsweise so groß wie für die mechanischen Eigenschaften des Gewebes 10' noch gut zulässig, vorgesehen sein. Durch die Länge dieser Flottierungen kann man die Reflektionseigenschaften der Projektionsfläche 11 des Gewebes 10' auch in gewünschter Weise beeinflussen, also die Abhängigkeit der Leuchtdichte von auf diese Projektionsfläche senkrecht projiziertem weißem Licht von den horizontalen und den vertikalen Ausstrahlungswinkeln a, -a, b, -b. Auch die Art und die Dicke der an der Projektionsfläche 11 sichtbaren Fäden bzw. Fadenbereiche spielen für die Reflektionseigenschaften eine Rolle, so daß auch durch diese Parameter Fadendicke und Fadenart die Reflektionseigenschaften beeinflußt werden können, ebenso wie durch die Fadendichten der die Projektionsfläche bildenden Fäden und dergleichen.

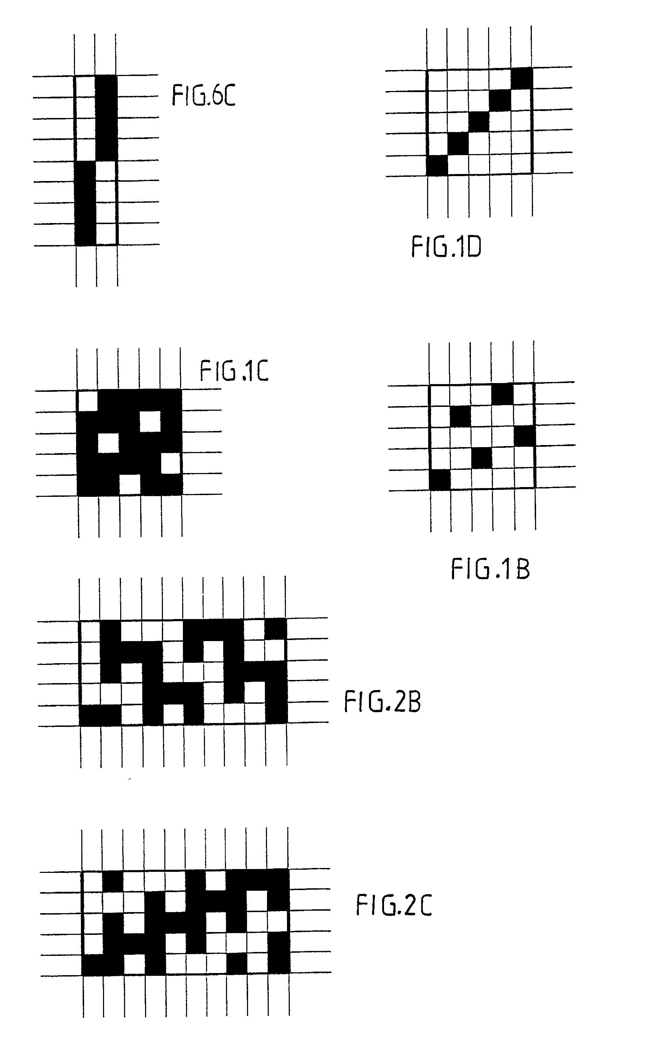

Fig. 1A zeigt einen ausschnittsweisen Querschnitt durch ein unbeschichtetes Einfachgewebe 10' , das eine Projektionswand 10 bildet, indem sein eines Fadensystem (erstes Fadensystem) 14 aus an der Projektionsfläche 11 dominierenden hellen Fäden 12 und sein anderes Fadensystem (zweites Fadensystem) 16 aus dunklen Fäden 13 jeweils zweckmäßig höchstmöglicher Fadendichten besteht und in unterschiedlichen Bindungen gewoben sein kann, von denen drei Bindungen in den Fig. 1B bis 1D dargestellt sind. Es besteht entweder das Kettfadensystem aus dunklen Fäden 13 und das Schußfadensystem aus hellen Fäden 12 oder umgekehrt. Die an der die Projektionsfläche 11 bildenden Vorderseite 11 des Gewebes 10' flottierenden Fäden 12 sind jeweils die dominierenden hellen Fäden und die anderen Fäden 13 sind dunkel zwecks Verringerung der Lichtdurchlässigkeit des Gewebes. Diese Fäden 13 flottieren an der Rückseite 21 des Gewebes 10' und bilden hier dominierende dunkle Fäden.

Fig. 1B zeigt eine Atlasbindung 1/4, Fig. 1C eine Atlasbindung 4/1, Fig. 1D eine Köperbindung 1/4. Auch Köperbindung 4/1 ist möglich. Auch andere Atlasbindungen und Köperbindungen oder Ableitungen von ihnen kommen infrage, vorzugsweise jedoch Bindungen, bei denen die eine Zahl eine "1" ist. Die andere Zahl der Bindung ist bei Atlasbindungen geradzahlig, 4, 6, 8, 10, usw. und bei Köperbindungen eine ganze Zahl größer 1, also 2, 3, 4, 5 ...

In Fig. 1E ist eine ausschnittsweise Draufsicht auf ein in Atlasbindung 1/4 oder 4/1 gewobenes Gewebe 10' dargestellt. Indem die dunklen Fäden 13 , die bei vertikaler Anordnung dieser Projektionswand 10 in horizontaler Richtung verlaufen, nur einen kleinen Teil der Fläche der Vorderseite 11 des Gewebes einnehmen, beeinflussen sie die Helligkeit der Projektionsfläche 11 nur wenig und, da sie, falls sie helle Farbe hätten, für die Reflektion von auf die Projektionsfläche auftreffenden Lichtes in vertikalen Ausstrahlungswinkeln besonders bedeutsam wären, reduzieren sie infolge ihrer dunklen, vorzugsweise schwarzen Farbe die Leuchtdichte in vertikalen Ausstrahlungswinkeln besonders stark, was beispielsweise den Vorteil hat, daß der Bodenbereich und Deckenbereich des betreffenden Raumes bei Vorführungen weniger mit von der Projektionsfläche reflektiertem Licht beaufschlagt wird.

Fig. 2A zeigt einen Teilschnitt durch ein eine Projektionswand 10 bildendes, unbeschichtetes Einfachgewebe 10' mit zwei in derselben Hauptrichtung des Gewebes verlaufenden Fadensystemen 14, 15, von denen das Fadensystem 14 die an der Projekionsfläche 11 dominierenden hellen Fäden 12 bildet, und einem in der hierzu senkrechten anderen Hauptrichtung des Gewebes 10' verlaufenden einzigen Fadensystem 16. Die beiden in derselben Hauptrichtung (Kettfaden- oder Schußfadenrichtung) des Gewebes 10' verlaufenden Fadensysteme 14, 15, sind in diesem Ausführungsbeispiel so getroffen, daß die an der als Projektionsfläche dienenden Vorderseite 11 des Gewebes 10' allein flottierenden hellen Fäden 12 mit den Fäden 13' des Fadensystemes 16 eine Bindung 1/4 und die in derselben Hauptrichtung des Gewebes 10' wie die Fäden 12 verlaufenden dunklen Fäden 12' des anderen Fadensystemes 15 mit den Fäden 13' des Fadensystemes 16 eine Bindung 4/1 haben. Die Fäden 13' können vorzugsweise helle Fäden, in manchen Fällen jedoch auch dunkle Fäden sein. Die dunklen Fäden 12' des Fadensystems 15 flottieren an der Rückseite 21 des Gewebes 10' und bilden hier dominierende dunkle Fäden. Zumindest die Fäden 12 und 12' der Fadensysteme 14, 15 können zweckmäßig mit hohen, vorzugsweise mit größtmöglichen Fadendichten verlegt sein.

Die genannten Bindungen 1/4 bzw. 4/1 können Atlasbindungen oder Köperbindungen oder Ableitungen solcher Bindungen sein.

Beispiele von für das Gewebe 10' nach Fig. 2A geeigneten Bindungspatronen sind in den Fig. 2B und 2C dargestellt, wo Fig. 2B eine Ableitung einer Atlasbindung und Fig. 2C eine Ableitung einer Köperbindung darstellt. Es können auch andere Flottierungen ergebende Bindungen vorgesehen sein.

Es sei hier noch zu dem Ausdruck "Fadendichte" folgendes erläutert. Unter Fadendichte eines Fadensystemes eines Gewebes versteht man die Anzahl der nebeneinander angeordneten Fäden des betreffenden Fadensystemes pro Breiteneinheit. Die möglichen Fadendichten werden durch die Dicken der Fäden begrenzt. Eine höchstmögliche Fadendichte eines Fadensystems ist die, die unter Berücksichtigung der Eigenschaften dieser Fäden noch sinnvoll gewoben werden kann. Auch unter hoher Fadendichte ist verstanden, daß die Anzahl der Fäden des betreffenden Fadensystems pro Breiteneinheit groß sein soll, vorzugsweise möglichst groß oder nahezu möglichst groß sein soll.

Fig. 3A zeigt einen Teilschnitt durch ein eine Projektionswand 10 bildendes unbeschichtetes Doppelgewebe 10', das also aus zwei übereinanderliegenden Teilgeweben, nämlich einem die an der Vorderseite 11 dominierenden hellen Fäden 12 aufweisenden Obergewebe 17 und einem Untergewebe 18 besteht. Diese Teilgewebe 17 und 18 haben vorzugsweise Atlasbindung. In manchen Fällen kann auch mindestens ein Teilgewebe Köperbindung haben oder Ableitungen von Atlas- oder Köperbindungen. Für das Untergewebe 18 sind auch noch andere Bindungen oft zweckmässig, bspw. Leinwandbindung.

Eine mögliche Bindungspatrone für das Gewebe 10' nach Fig. 3A ist in Fig. 3D dargestellt. Die Fäden 12, 13 des Obergewebes 17 sind mit "O" und die Fäden 12", 13" seines Untergewebes 18 mit "U" bezeichnet. Diese Bindungspatrone setzt sich aus den in Fig. 3B und Fig. 3C dargestellten Atlas-Bindungspatronen 1/4 und 4/1 zusammen, wobei Fig. 3B die des Obergewebes 17 zeigt. Sollte eine Köperbindung vorgesehen sein, so kann die Bindungspatrone des Obergewebes 17 bzw. Untergewebes 18 nach Fig. 1D oder invers zu ihr vorgesehen sein. Auch hier können natürlich anstatt Bindungspatronen 1/4 oder 4/1 auch Bindungen anderer Zahlenverhältnisse vorgesehen sein, die zu der betreffenden Bindungsart passen, wie im Falle der Atlasbindung 1/6, 1/7, 1/8, ... oder im Falle der Köperbindung 1/2, 1/3, 1/5, 1/6, ... Eine oft zweckmäßige Bindungsableitung kann bspw. eine unechte Atlasbindung sein, die einen geradzahligen Bindungsrapport, bspw. 6, hat oder es können auch sonstige geeignete Bindungsableitungen von vorzugsweise Atlas- oder Köperbindungen vorgesehen sein.

Unter Bindungsrapport ist die Summe der beiden Zahlen der betreffenden Bindung verstanden. Eine Bindung 1/4 hat also einen Bindungsrapport 5. Die Möglichkeit auch Bindungsableitungen, insbesondere Ableitungen der beiden Grundbindungen Atlas und Köper vorsehen zu können, sei am Beispiel einer Köperbindung erläutert, die in manchen Fällen zweckmäßig vorgesehen sein kann. Bei ihr überbrückt jeder Kettfaden abwechselnd einen Schußfaden, dann zwei Schußfäden, dann wieder einen Schußfaden usw. Eine solche Köperbindungsableitung ist also eine Mischbindung 1/4 und 2/4. Hierdurch werden die schräg zur Kettfaden- und Schußfadenrichtung verlaufenden Grate an der Vorderseite des Gewebes deutlicher, was dann infrage kommt, wenn der hierdurch bedingte Reflektionseffekt aus irgendwelchen Gründen erwünscht sein sollte.

Fig. 4A zeigt einen Teilschnitt durch ein eine Projektionswand 10 bildendes, unbeschichtetes Doppelgewebe 10' mit Füllfäden 20. Dieses Doppelgewebe 10' besteht aus einem Obergewebe 17 aus hellen Fäden 12, 13, von denen die hier dominierenden hellen Fäden 12 an der Vorderseite 11 dieses Gewebes flottieren, wogegen die hellen Fäden 13, welche senkrecht zu den Fäden 12 verlaufen, an dieser Vorderseite 11 weniger oder vorzugsweise überhaupt nicht flottieren. Das Untergewebe 18 besteht entweder ganz aus dunklen Fäden 12", 13" oder es besteht nur eines seiner beiden Fadensysteme aus dunklen Fäden, vorzugsweise das die an der Unterseite des Gewebes flottierenden Fäden 12" aufweisende Fadensystem. Die dunklen Fäden können Schußfäden und/oder Kettfäden sein und gehören zum Untergewebe 18. Zwischen Obergewebe 17 und Untergewebe 18 sind hier in einer der beiden Hauptrichtungen des Gewebes 10' verlaufende Füllfäden 20 angeordnet, die also eine Schicht Füllfäden 20 oder ein einziges Füllfadensystem bilden. Diese Füllfäden 20 sind in diesem bevorzugten Ausführungsbeispiel lediglich zwischen das Obergewebe 17 und das Untergewebe 18 eingelegt und binden so nicht selbst und sind auch nicht durch Fäden des Obergewebes oder des Untergewebes eingebunden, sondern nur durch die zwischen jeweils benachbarten Füllfäden hindurchgehenden, als Abbindefäden dienenden Fäden 12", die das Untergewebe 18 mit dem Obergewebe 17 binden, gehalten, so daß sie nicht störend verrutschen können.

Eine mögliche Bindungspatrone eines Gewebes 10', von dem in Fig. 4A ein Teilschnitt dargestellt ist, ist in Fig. 4B dargestellt. Diese Bindungspatrone ist aus der Bindungspatrone nach Fig. 3D durch Einfügung der Füllfäden 20, die hier mit "F" angegeben sind, abgeleitet. Die Füllfäden 20 können vorzugsweise helle Fäden sein und vorzugsweise auch dicker und/oder steifer sein als die Fäden des Obergewebes 17 und des Untergewebes 18, um hierdurch das Gewebe zu versteifen, wodurch der Gefahr von Wellenbildung oder Faltenbildung auch in schwierigen Fällen besonders gut begegnet werden kann.

Zu den Fig. 3A und 4A sei noch ausgeführt, daß man die Bindungsart solcher Gewebe 10' auch so vorsehen kann, daß die an der Vorderseite 11 des Gewebes 10' flottierenden hellen Fäden 12 des betreffenden Fadensystems oder eine Teilanzahl dieser Fäden, bspw. jeder zweite oder dritte dieser Fäden an das Untergewebe 18 angebunden sind (wobei man in der Fachsprache hier von "Abbindung" spricht), wie es Fig. 5A an einem Beispiel zeigt. Die Fäden 12" werden dann abweichend von Fig. 3A und 4A so verlegt, daß sie das Obergewebe 17 nicht anbinden. Auch andere Abwandlungen der Gewebe 10' nach Fig. 3A und 4A sind möglich.

Fig. 5B zeigt eine Draufsicht auf einen Ausschnitt der Projektionsfläche 11 eines Gewebes 10' nach Fig. 5A, wobei eine Atlasbindung 1/4 angenommen ist und alle Fäden 12, 13 des sichtbaren Obergewebes 17 helle Fäden, bspw. weisse oder silbrige Fäden sind.

Fig. 6A zeigt einen Teilschnitt durch ein aus einem Obergewebe 17, einem Zwischengewebe 23 und einem Untergewebe 18 bestehenden, unbeschichteten, eine Projektionswand 10 bildenden Dreifachgewebe 10'. Vorzugsweise können bei ihm alle Fäden 12" und 13" der Fadensysteme 24 und 25 seines Untergewebes 18 oder nur die Fäden des Fadensystemes 25 seines Untergewebes 18, aus dunklen Fäden 12", 13" bestehen und alle übrigen Fäden, insbesondere die Fäden 12, 13 seines Obergewebes 17 und die Fäden 26, 26' seines Zwischengewebes 23 aus hellen Fäden zweckmäßig bestehen.

Wenn bspw. die geschnitten dargestellten, senkrecht zur Bildebene verlaufenden Fäden 13, 26', 13" dieses Dreifachgewebes 10' die Kettfäden sind, dann weist das Obergewebe 17 das oberste Kettfadensystem, das Zwischengewebe 23 das mittlere Kettfadensystem und das Untergewebe 18 das unterste Kettfadensystem auf. Die an der die Projektionsfläche 11 aufweisenden oder bildenden Vorderseite 11 dieses Gewebes 10' flottierenden und dominierenden hellen Fäden 12 sind in diesem Fall Schußfäden des Obergewebes 17.

Die Bindung des Obergewebes 17 kann z.B. besonders zweckmäßig eine Atlasbindung sein, hier A 1/4 (A = Atlas). Das Zwischengewebe 23 kann in gleicher Bindung wie das Obergewebe 17 gewoben sein, also in A 1/4, wobei jedoch seine Fäden 26 auch dem Anbinden von Fäden 13 des Obergewebes 17 dienen. Auch das Untergewebe 18 kann eine Atlasbindung, hier die Bindung A 4/1 aufweisen und ist mittels aller oder einer Teilanzahl seiner Fäden 12" an das Zwischengewebe 23 wie dargestellt angebunden, so daß alle Teilgewebe 17, 18, 23 miteinander verbunden sind. Eine vorteilhafte mögliche Bindungspatrone des Gewebes 10' nach Fig. 6A ist in Fig. 6B dargestellt. Die Fäden des Obergewebes 17 sind hier mit "O", die Fäden des Zwischengewebes 23 mit "Z" und die Fäden des Untergewebes 18 mit "U" bezeichnet.

Bezüglich des Abbindens bzw. des Anbindens von Fäden eines Teilgewebes an ein anderes Teilgewebe eines mehrere übereinander angeordnete Teilgewebe aufweisenden Gewebes sei noch allgemein erläutert, daß die Fäden des einen Fadensystems eines solchen Teilgewebes, die dem Abbinden bzw. Anbinden eines anderen oder mehrerer anderer Teilgewebe dienen, sämtliche Fäden dieses betreffenden Fadensystems sein können oder, was im allgemeinen noch vorteilhafter ist, nur eine Teilanzahl dieser Fäden, vorzugsweise jeder n-te Faden des betreffenden Fadensystems, wo n eine ganze Zahl 2, 3, 4, ... ist. Dies gilt allgemein für alle infragekommenden Gewebe, bei denen zwei oder mehr Teilgewebe miteinander zu einem Gesamtgewebe verbunden sind.

Die Bindungen des Obergewebes 17, Zwischengewebes 23 und Untergewebes 18 eines Dreifachgewebes 10' können gleich oder unterschiedlich sein. Vorzugsweise kann zumindest das Obergewebe 17 in Atlasbindung vorgesehen sein. Das Zwischengewebe 23 und das Untergewebe 18 können dann bspw. in Köperbindung vorgesehen sein oder auch in Atlasbindung oder nur das Zwischengewebe oder das Untergewebe in Köperbindung, usw. Auch andere Bindungskombinationen sind möglich. Bspw. könnte in manchen Fällen auch das Obergewebe und/oder das Zwischengewebe und/oder das Untergewebe in Leinwandbindung oder aus einer von ihr abgeleiteten Bindung, bspw. in einer in Fig. 6C dargestellten Ripsbindung, vorgesehen sein. Im Falle des Obergewebes kann man dann die Fadendichte seines die dominierenden hellen Fäden bildenden Fadensystemes mit wesentlich höherer Fadendichte vorsehen als die seines anderen Fadensystemes, siehe hierzu auch das nachfolgende Ausführungsbeispiel gemäß Fig. 7A und 7B, dessen Gewebe 10' bspw. auch als Obergewebe 17 eines Mehrfachgewebes vorgesehen sein kann, welches Obergewebe vorzugsweise ganz aus hellen Fäden bestehen kann.

In Fig. 7A ist ein Teilschnitt durch eine Projektionswand 10 dargestellt, welche aus einem hier als Einfachgewebe ausgebildeten Gewebe 10' und einer rückseitigen Beschichtung 30 von ihm besteht. Die rückseitige Beschichtung 30 ist durch eine an das Gewebe 10' angeklebte oder angeschweißte Folie 30 gebildet. Die unbeschichtete Vorderseite 11 des aus Kettfäden und Schußfäden bestehenden Gewebes 10' bildet im ganzen oder im wesentlichen die Projektionsfläche 11 dieser Projektionswand 10.

Auch diese Projektionswand 10 ist wie auch alle anderen dargestellten Projektionswände 10 aufwickelbar, also flexibel.

Die Folie 30 ist dunkel, vorzugsweise schwarz, damit diese Projektionswand vollständig oder weitgehend lichtundurchlässig ist. Die Fäden 12 sind die dominierenden hellen Fäden der Projektionsfläche 11 und bilden ein Fadensystem 17. Die mit ihnen verwobenen, quer zu ihnen verlaufenden Fäden 13 können ebenfalls helle Fäden, falls gewünscht auch dunkle Fäden sein und bilden das zweite Fadensystem 18 des Gewebes 10'. In diesem Ausführungsbeispiel hat dieses Gewebe 10' Leinwandbindung, wie die Draufsicht in Fig. 7B zeigt, doch kann das Gewebe auch sonstige geeignete Ausbildung aufweisen.

Damit die als Projektionsfläche 11 dienende Vorderseite dieses Gewebes 10' die gewünschten anisotropen Eigenschaften hat, die weitgehend oder wesentlich durch die bei vertikaler ebener Stellung der Projektionswand 10 vertikal verlaufenden dominierenden hellen Fäden 12 des Fadensystemes 17 bestimmt sind, sind hier die Fäden 12 des Fadenssystemes 17 in hoher, vorzugsweise möglichst hoher Fadendichte verlegt, so daß sie aneinander anliegen, vorzugsweise aneinander angedrückt sind und zwischen sich keine Zwischenräume freilassen.

Die in der Projektionsstellung, d.h. bei vertikaler, ebener Stellung dieser Projektionswand 10 horizontal verlaufenden Fäden (Querfäden) 13 des Fadensystemes 18 sind dagegen mit sehr geringer Fadendichte verlegt, indem zwischen ihnen große Zwischenräume sind, vorzugsweise Zwischenräume, die mehrfach oder vielfach größer als die Durchmesser dieser Fäden 13 sind, wie es Fig. 7A und 7B an einem Beispiel zeigen. Diese "Querfäden" 13 können jedoch vorzugsweise dikker sein als die Fäden 12, um diesem Gewebe trotz der geringen Fadendichte der Querfäden 13 gute mechanische Stabilität zu geben. Diese Stabilität kann noch durch die Folie 30 erhöht werden. Vorzugsweise ist diese Folie 30 dünn bis sehr dünn, damit das Flächengewicht dieser Projektionswand 10 trotz dieser Beschichtung noch relativ gering ist und sich diese Projektionswand auch leicht aufwickeln läßt.

Wie erwähnt, kann das rückseitig mit einer Beschichtung 30 versehene Gewebe 10' auch andere Konstruktionen aufweisen, bspw. Gewebestrukturen nach den Ausführungsbeispielen nach den Fig. 1A, 2A, 3A, 4A, 5 und 6A. Falls dieses Gewebe dunkle Fäden aufweist, die bereits ausreichende Lichtundurchlässigkeit der Projektionswand bewirken, kann die Beschichtung 30 dann auch nicht dunkel sein und dient dann nur der Erhöhung der mechanischen Festigkeit der Projektionswand. Ist dies nicht erforderlich, kann die Beschichtung weglassen und das Gewebe allein die Projektionswand bilden.

In Fig. 8 ist in schaubildlicher Ansicht ein Projektionswandgerät 40 dargestellt. Es weist eine Projektionswand 10 auf, die normalerweise sich innerhalb eines Kastens 42 befindet, in welchem sie auf einer nicht dargestellten Aufwickelwelle aufgewickelt und gehalten ist. Dieser Kasten 42 kann bspw. an einer Wand oder Decke eines Raumes befestigt sein oder an einem nicht dargestellten Gestell gehalten sein oder auch sonstige Anordnung haben. Die aus einem unbeschichteten Gewebe 10' oder einem rückseitig beschichteten Gewebe 10' bestehende Projektionswand 10 ist rechteckförmig oder quadratisch und trägt an ihrer unteren Kante eine Beschwerungsstange 43. Diese Projektionswand 10 kann aus dem Kasten 42, wie dargestellt, derart herausgezogen werden, daß sie sich im wesentlichen oder ganz außerhalb des Kastens 42 vertikal und in ebener Gestalt befindet, also in Projektionsstellung ihrer Projektionsfläche und sie kann dann für die Wiedergabe von Einzelbildern oder Filmen dienen, welche Bilder auf die durch ihre vertikale ebene Vorderseite 11 ganz oder zum Teil gebildete Projektionsfläche projiziert werden. Dieses Gewebe 10' ist gemäß der Erfindung so ausgebildet, daß es beschriebene anisotrope Reflektionseigenschaften hat, bspw. Reflektionseigenschaften ähnlich oder gleich der im Diagramm nach Fig. 9 dargestellten Leuchtdichtekurven in Abhängigkeit der horizontalen und vertikalen Ausstrahlungswinkel a, -a, b, -b.

Auf die vertikale ebene Projektionsfläche 11 dieser Projektionswand 10 senkrecht auftreffendes weißes Licht - ein Lichtstrahl S dieses Lichtes ist eingezeichnet - wird also in horizontalen, geometrischen Ebenen, wie E1, und in zur Ebene der Projektionsfläche 11 senkrechten vertikalen geometrischen Ebenen, wie E2, unterschiedlich reflektiert. Dieses auf die Projektionsfläche 11 auftreffende weiße Licht wird zum größten Teil reflektiert. In Fig. 8 sind von einem kleinen Flächenbereich der Projektionswand 10 ausgehende, also reflektierte Lichtstrahlen eingezeichnet, nämlich zwei Lichtstrahlen RH1 und RH2 in der geometrischen Ebene E1 und zwei Lichtstrahlen RV1 und RV2 in der vertikalen geometrischen Ebene E2, wobei in die Schnittlinie dieser beiden Ebenen der Lichtstrahl S und die Flächennormale N fällt, auf die die eingezeichneten horizontalen Ausstrahlungswinkel a, -a und vertikalen Ausstrahlungswinkel b, -b bezogen sind. Diese Lichtstrahlen RH1 und RH2, RV1 und RV2 gehen von dem Schnittpunkt dieser Ebenen E1 und E2 mit der Ebene der Projektionsfläche 11 aus. Der Winkel des reflektierten Lichtstrahles RH1 mit der ihm zugeordneten Normalen N ist also mit a und der mit dem neben der anderen Seite der Flächennormalen N verlaufende Lichtstrahl RH2 ist mit -a in der geometrischen horizontalen Ebene E1 bezeichnet. Entsprechend ist der Winkel, den der schräg aufwärts führende Strahl RV1 mit dieser Normalen N in der vertikalen Ebene E2 einschließt, mit b, und der Winkel, den der schräg nach unten in der vertikalen Ebene E2 führende Strahl RV2 mit der Normalen N einschließt, mit -b bezeichnet. b und -b seien als vertikale Ausstrahlungswinkel bezeichnet, wogegen die Winkel a und -a als horizontale Ausstrahlungswinkel bezeichnet seien, wobei diese Ausstrahlungswinkel von der Flächennormalen N aus gemessen werden.

Bei einer solchen Projektionswand 10 ist es im allgemeinen zweckmäßig, daß die Leuchtdichte LD in Abhängigkeit des Ausstrahlungswinkel a gleich der Leuchtdichte LD in Abhängigkeit des Ausstrahlungswinkel -a ist, also gilt LD(a) = LD(-a). Entsprechend ist es im allgemeinen günstig und erwünscht, daß LD(b) = LD(-b) ist. Diese Symmetrien der Leuchtdichten LD in horizontalen Ebenen bzw. in vertikalen Ebenen zu den Flächennormalen der Projektionswand 10 ergeben sich von selbst, wenn die Bindungskartusche des Gewebes, wenn es ein Einfachgewebe ist, oder des oder der an der Reflektion mitwirkenden Teilgewebe über den als Projektionsfläche vorgesehenen Bereich der Projektionswand 10 konstant bleibt, was schon aus Gründen einfachen Webens zweckmäßig ist. Doch kann man auch vorsehen, daß die Bindungskartusche sich über die Breite oder Länge des Gewebes ändert, wenn aus irgendwelchen Gründen es erwünscht sein sollte, daß LD(a) ungleich zu LD(-a) bzw. LD(b) ungleich zu LD(-b) ist.

Das Gewebe der in Fig. 8 dargestellten Projektionswand 10 kann aus einer einzigen Gewebebahn bestehen, ggf. jedoch auch aus mehreren Gewebebahnen zusammengesetzt sein, die bspw. miteinander vernäht, verklebt oder sonstwie verbunden sind, vorzugsweise zueinander parallel nebeneinander mit oder ohne Überlappung und/oder übereinander angeordnet sind.

**Patentansprüche**

1. Projektionswand, deren auf ihrer Vorderseite vorgesehene Projektionsfläche Licht reflektiert, welche Projektionswand ein Gewebe aufweist, dadurch gekennzeichnet, daß das Gewebe (10') der Projektionswand deren Projektionsfläche (11) bildet und zumindest auf dieser Projektionsfläche (11) unbeschichtet ist, und daß auf dieser Projektionsfläche (11) in einer der beiden Hauptrichtungen (Schußfadenrichtung oder Kettfadenrichtung) des Gewebes (10') verlaufende helle Fäden (12) eines ersten Fadensystems (14) dominieren - nachfolgend dominierende helle Fäden genannt -, wobei diese Hauptrichtung bei vertikaler, ebener Projektionsstellung der Projektionsfläche (11) vertikal verläuft, derart, daß die Projektionsfläche (11) des Gewebes (10') solche anisotropen Reflektionseigenschaften aufweist, daß sich die durch senkrecht auf die Projektionsfläche, wenn sie sich in Projektionsstellung befindet, auftreffendes weißes Licht konstanter Beleuchtungsstärke erzeugte Leuchtdichte an dieser Projektionsfläche zumindest bis zu horizontalen Ausstrahlungswinkeln (a, -a) von mindestens 30° wesentlich weniger ändert als bis zu gleich großen vertikalen Ausstrahlungswinkeln (b, -b).

2. Projektionswand nach Anspruch 1, dadurch gekennzeichnet, daß die Projektionsfläche (11) des Gewebes (10') bei ebener Anordnung in senkrechter Parallelprojektion zumindest zu 70 %, vorzugsweise zumindest zu 80 %, durch die dominierenden hellen Fäden (12) gebildet ist.

3. Projektionswand nach Anspruch 2, dadurch gekennzeichnet, daß die Projektionsfläche (11) des Gewebes (10') zumindest zu 90%, vorzugsweise im wesentlichen oder allein durch die dominierenden hellen Fäden (12) gebildet ist.

4. Projektionswand nach einem der vorhergehenden Ansprüche, dadurch gekennzeichnet, daß die Rückseite (21) des Gewebes (10') zur Herabsetzung der Lichtdurchlässigkeit des Gewebes zumindest teilweise durch dunkle Fäden gebildet ist, vorzugsweise auch diese Rückseite des Gewebes (10') unbeschichtet ist, insbesondere die Projektionswand durch das Gewebe gebildet ist.

5. Projektionswand nach Anspruch 4, dadurch gekennzeichnet, daß die Fläche der Rückseite des Gewebes bei ebener Anordnung in senkrechter Parallelprojektion zumindest zu 60 %, vorzugsweise zumindest zu 80 %, insbesondere zumindest zu 90 % oder im wesentlichen durch in einer Hauptrichtung des Gewebes verlaufende dunkle Fäden - nachfolgend dominierende dunkle Fäden genannt - gebildet ist.

6. Projektionswand nach einem der vorhergehenden Ansprüche, dadurch gekennzeichnet, daß das Gewebe (10') rückseitig beschichtet ist, wobei diese Beschichtung (30) vorzugsweise dunkelfarbig ist und vorzugsweise aus Kunststoff besteht.

7. Projektionswand nach einem der vorhergehenden Ansprüche, dadurch gekennzeichnet, daß die dominierenden hellen Fäden (12) der Projektionsfläche (11) und/oder die dominierenden dunklen Fäden (13) der Rückseite des Gewebes (10') so verlegt sind, daß ihre an der Vorderseite (11) des Gewebes bzw. an der Rückseite des Gewebes freiliegenden Längsbereiche (Fadenstrecken) länger, vorzugsweise wesentlich länger, als ihre unter den mit ihnen zum Gewebe (10') oder zu einem Obergewebe (17) bzw. Untergewebe (18) verwobenen, zu ihnen quer verlaufenden Fäden - nachfolgend Querfäden genannt - befindlichen und so durch diese Querfäden überdeckten Längsbereiche sind, vorzugsweise die dominierenden hellen Fäden und/oder die dominierenden dunklen Fäden flottierende Fäden sind.

8. Projektionswand nach Anspruch 7, dadurch gekennzeichnet, daß die freiliegenden Längsbereiche der dominierenden hellen Fäden (12) der Vorderseite und/oder der dominierenden dunklen Fäden (13) der Rückseite des Gewebes (10') über jeweils mindestens zwei Querfäden des zugeordneten Querfadensystems, vorzugsweise über jeweils mindestens vier Querfäden bindungsfrei liegen und daß alle oder fast alle restlichen Längsbereiche dieser dominierenden hellen Fäden und/oder dieser dominierenden dunklen Fäden jeweils weniger Querfäden des zugeordneten Querfadensystems als die zwischen ihnen befindlichen freiliegenden Längsbereiche queren, vorzugsweise jeweils nur einen Querfaden.

9. Projektionswand nach einem der vorhergehenden Ansprüche, dadurch gekennzeichnet, daß das Gewebe (10') ein Einfachgewebe aus zwei sich kreuzenden Fadensystemen einer Bindung m/n , wo m und n gleich große oder vorzugsweise unterschiedlich große ganze Zahlen sind, vorzugsweise m oder n gleich 1 ist, und wobei das eine Fadensystem (14) die dominierenden hellen Fäden (12) und das andere Fadensystem (16) an der Rückseite des Gewebes dominierenden dunkle Fäden bildet, oder daß das Gewebe (10') ein Einfachgewebe aus drei Fadensystemen (14, 15, 16) ist, nämlich aus zwei Schußfadensystemen und einem Kettfadensystem oder aus zwei Kettfadensystemen und einem Schußfadensystem, wobei vorzugsweise zwei dieser Fadensysteme aus hellen Fäden bestehen.

10. Projektionswand nach einem der Ansprüche 1 - 8, dadurch gekennzeichnet, daß das Gewebe (10') eine Mehrzahl übereinander liegender Teilgewebe (17, 18; 17, 18, 23) aufweist, vorzugsweise zwei oder drei Teilgewebe.

11. Projektionswand nach Anspruch 10, dadurch gekennzeichnet, daß die Teilgewebe (17, 18; 17, 18, 23) bindungstechnisch zu einem Mehrfachgewebe miteinander verbunden sind.

12. Projektionswand nach Anspruch 10, dadurch gekennzeichnet, daß mindestens zwei Teilgewebe, vorzugsweise alle Teilgewebe gesonderte Gewebe sind, die erst nach ihrer Herstellung miteinander verbunden sind, vorzugsweise durch Nähen, Kleben oder Schweißen.

13. Projektionswand nach Anspruch 10, 11 oder 12, dadurch gekennzeichnet, daß die Fäden zumindest eines Fadensystems des hintersten Teilgewebes dunkle Fäden sind.

14. Projektionswand nach einem der Ansprüche 10 - 13, dadurch gekennzeichnet, daß zwischen mindestens zwei Teilgeweben (17, 18) Füllfäden (20) , vorzugsweise helle Füllfäden, angeordnet sind.

15. Projektionswand nach einem der vorhergehenden Ansprüche, dadurch gekennzeichnet, daß das Gewebe (10') oder mindestens eines seiner Teilgewebe (17, 18, 23) Atlasbindung aufweist, vorzugsweise eine Atlasbindung 1/4 oder 4/1.

16. Projektionswand nach einem der vorhergehenden Ansprüche, dadurch gekennzeichnet, daß das Gewebe (10') oder mindestens eines seiner Teilgewebe (17, 18, 23) Köperbindung aufweist.

17. Projektionswand nach einem der vorhergehenden Ansprüche, dadurch gekennzeichnet, daß das Gewebe oder mindestens eines seiner Teilgewebe eine aus einer Grundbindung, vorzugsweise einer Atlasbindung oder Köperbindung, entwickelte Bindungsableitung erster oder höherer Ordnung, vorzugsweise eine unregelmäßige Atlasbindung oder Fischgrat-Köperbindung aufweist.

18. Projektionswand nach einem der vorhergehenden Ansprüche, dadurch gekennzeichnet, daß das Gewebe (10') oder mindestens eines seiner Teilgewebe Leinwandbindung oder eine aus einer Leinwandbindung abgeleitete Bindungsableitung erster oder höherer Ordnung, vorzugsweise eine Ripsbindung, aufweist.

19. Projektionswand nach einem der vorhergehenden Ansprüche, dadurch gekennzeichnet, daß zumindest die hellen dominierenden Fäden (12) des Gewebes (10'), vorzugsweise alle Fäden des Gewebes (10'), aus künstlich hergestellten Fasern und/oder künstlich hergestellten Filamenten bestehen oder solche Fasern oder Filamente enthalten, vorzugsweise aus polymeren Kunststoffen bestehende mattierte und/oder glänzende Fasern bzw. Filamente sind.

20. Projektionswand nach Anspruch 19, dadurch gekennzeichnet,daß zumindest ein Teil der künstlich hergestellten Fasern oder Filamente von Fäden des Gewebes aus Polyester bestehen, vorzugsweise zumindest die hellen Fäden des Gewebes zur Erhöhung von deren Reflektionseigenschaften infolge ihres hohen Brechungsindex.

21. Projektionswand nach Anspruch 19 oder 20, dadurch gekennzeichnet, daß die Fäden zumindest eines seiner Fadensysteme Multifilamentgarne sind, vorzugsweise zumindest die hellen Fäden des Gewebes, wobei vorzugsweise die Multifilamentgarne mindestens eines Fadensystems, vorzugsweise eines Kettfadensystems aus zu ihrem Zusammenhalt miteinander verwirbelten Filamenten bestehen.

22. Projektionswand nach Anspruch 21, dadurch gekennzeichnet, daß die Filamente der Multifilamentgarne mindestens eines Fadensystems, vorzugsweise die dominierenden hellen Fäden (12), unrunde Querschnitte aufweisen, vorzugsweise multilobale Querschnitte, insbesondere trilobale, septolobale oder octolobale Querschnitte.

23. Projektionswand nach einem der vorhergehenden Ansprüche, dadurch gekennzeichnet, daß das Gewebe so ausgebildet ist, daß in seiner Projektionsstellung die durch senkrecht auf seine Projektionsfläche auftreffendes weißes Licht konstanter Beleuchtungsstärke bewirkbare Leuchtdichte bis zu horizontalen Ausstrahlungswinkeln (a, -a) von mindestens 30°, vorzugsweise bis zu horizontalen Ausstrahlungswinkeln (a, -a) von ca. 35 bis 45°, insbesondere von ungefähr 40°, bezogen auf die Leuchtdichte bei einem Ausstrahlungswinkel von 0°, sich um höchstens 20 % ändert, vorzugsweise um höchstens 10%, besonders zweckmäßig zumindest im wesentlichen konstant ist.

24. Projektionswand nach einem der vorhergehenden Ansprüche, dadurch gekennzeichnet, daß das Gewebe so ausgebildet ist, daß in seiner Projektionsstellung die durch senkrecht auf seine Projektionsfläche auffallendes weißes Licht konstanter Beleuchtungsstärke bewirkte Leuchtdichte in bei b = 0° beginnenden vertikalen Ausstrahlungswinkelbereichen von höchstens 25°, vorzugsweise von etwa 5 bis 15°, sich nur wenig, vorzugsweise um maximal 20 %, oder gar nicht ändert und anschließend an diese Ausstrahlungswinkelbereiche mit größer werdenden vertikalen Ausstrahlungswinkeln rasch abnimmt.

25. Projektionswand nach einem der vorhergehenden Ansprüche, dadurch gekennzeichnet, daß zumindest eine Teilanzahl der dominierenden hellen Fäden (12) , vorzugsweise alle hellen dominierenden Fäden, texturierte (gekräuselte) Multifilamentgarne sind.

26. Projektionswand nach einem der vorhergehenden Ansprüche, dadurch gekennzeichnet, daß zumindest eine Teilanzahl der dominierenden hellen Fäden (12) , vorzugsweise alle dominierenden hellen Fäden, ungekräuselte, d.h. glatte Multifilamentgarne sind.

27. Projektionswand nach einem der vorhergehenden Ansprüche, dadurch gekennzeichnet, daß ihr Gewebe (10') aus einer einzigen, vorzugsweise unbeschichteten Gewebebahn besteht.

28. Projektionswand nach einem der Ansprüche 1 - 26, dadurch gekennzeichnet, daß ihr Gewebe aus einer Mehrzahl von vorzugsweise unbeschichteten Gewebebahnen zusammengesetzt ist.

29. Verwendung einer Projektionswand nach einem der vorhergehenden Ansprüche als Vorhang, vorzugsweise als Fenstervorhang.

FIG.1A

FIG.2A

FIG.3A

FIG.4A

FIG.5A

FIG.6A

FIG.6C

FIG.1D

FIG.1C

FIG.1B

FIG.2B

FIG.2C

FIG.1E

FIG,5B

FIG.3B

FIG.3C

FIG.3D

FIG.4B

O Z U O Z U O Z U O Z U O Z U

**FIG.6B**

**FIG.7A**

**FIG.7B**

# FIG.8

EP 0 438 161 A2

FIG.9